# EUROPEAN PATENT APPLICATION

(11) **EP 4 252 517 A2**
(43) Date of publication of application: **04.10.2023**
(21) Application number: 23162930.4
(22) Date of filing: 20.03.2023
(51) Int. Cl.: A01D 34/00, A01D 34/66, A01D 34/685, A01D 34/695, A01D 34/74, A01D 34/81, H02K 1/2786, A01D 34/78, A01D 34/73

(54) **DEVICE FOR THE MAINTENANCE OF LAND, IN PARTICULAR FOR THE CUT OF GRASS, AND RELATED MANUFACTURING AND OPERATING METHODS**

(30) Priority: 01.04.2022 IT 202200006533
(71) Applicant: Stiga S.p.A. in breve anche St. S.p.A., 31033 Castelfranco Veneto (TV) (IT)
(72) Inventor: VILLANOVA, Marco, 31020 Sernaglia della Battaglia (TV) (IT); FIOR, Roberto, 31033 Castelfranco Veneto (TV) (IT)
(74) Representative: PGA S.p.A.

(57) **Abstract**

The present invention relates to a device (2) for cutting grass. The device (2) comprises a shell (3) and at least one electric motor (10). The electric motor (10) comprises a stator (11) and a rotor (12), the rotor (12) being arranged outside the stator (11). The rotor (12) is at least partially configured to act, in a condition of use of said device (2), as a payload (4) of the device (2). The rotor (12) comprises a core (13) having a shape such as to enclose the stator (11), a hub (14) having a shape such as to allow the core (13) to be rotatably mounted with respect to the stator (11) and at least one cutting element (4a), which is constrained to the core (13) and extends from the core (13) away from the stator (11). The stator (11) is housed in a cavity (18) of the device (2). The rotor (12) is configured to act as a ventilation member intended to establish, in the cavity (18), a forced air flow useful to allow a cooling of said stator (11) by forced convection. The present invention further relates to a manufacturing method of the device (2) and an operating method of the device (2).

## Description

### FIELD OF THE INVENTION

The present invention relates to a mobile device aimed at carrying out land maintenance operations within a working area, for example mowing grass, tilling soil, verifying the state of turfgrasses, or activities in the agricultural field. The mobile device of the present invention comprises an electric motor configured to execute land maintenance operations.

The present invention further relates to a manufacturing method of a mobile device for land maintenance and an operating method of a mobile device for land maintenance.

### STATE OF THE ART

It is known in the field of gardening and soil maintenance to use electric motors for the actuation of a payload, for example a work tool such as a blade, to execute land maintenance operations. The payload can be configured to cut turfgrasses, plough soil, till soil, aerate or till soil. Such electric motors can be powered by a household outlet or by a rechargeable battery placed on board the device. The electric motors used in the technical field in which the invention is placed are typically of the brush type, i.e., provided with brushes and/or sliding contacts.

Mobile devices, such as lawnmowers, comprise a shell adapted to carry the electric motor: in particular such an electric motor is commonly arranged above or inside the shell, so that the portion of the shell operating as a cutting plate is interposed between the electric motor and the payload.

However, such an arrangement of the motor in the mobile devices of the state of the art entails some disadvantages. In particular, the assembly and disassembly of the electric motor can be arduous, thereby slowing down the manufacturing operations of the mobile device and the maintenance operations to the mobile device.

The mobile devices of the prior art also require important cooling systems so as to keep the temperatures of the electric motor within a safe temperature.

A further disadvantage of the mobile devices of the state of the art lies in the fact that their architecture favours the accumulation of dirt, such as grass, dust, soil, inside the main components of the motor, consequently increasing the risk of malfunction or ineffective cooling.

### OBJECTIVES OF THE INVENTION

Therefore, the object of the present invention is to solve at least one of the drawbacks and/or limitations of the previous technical solutions.

A first objective is to provide a mobile device which facilitates the installation of the electric motor for the operation of the payload during the manufacturing steps.

A further objective is to provide a mobile device which speeds up the production chain.

A further objective is to provide a mobile device which reduces production costs.

A further objective is to provide a mobile device which facilitates and speeds up maintenance operations on the electric motor.

A further objective is to provide a mobile device which protects the electric motor so as to increase the reliability thereof.

A further objective is to provide a mobile device for which the electric motor is less subject to the occurrence of overheating phenomena, so as to be able to omit from the mobile device (in whole or in part) thermal dissipation means intended to cope with such overheating phenomena.

A further objective is to provide a mobile device having a reduced weight with respect to the solutions of the prior art.

A further objective is to provide a mobile device characterized by more limited consumption.

A further objective is to provide a mobile device having a compact design.

### ASPECTS OF THE INVENTION

The objectives set forth above are effectively achieved by means of the present disclosure, in particular as defined by the features of the appended claims and/or the following aspects (the claims and aspects of the present invention can be considered individually or also in combination with each other).

A first aspect of the present invention is an independent aspect and relates to a device (2) for the maintenance of land (1), in particular for cutting grass, comprising:
- a shell (3) and
- at least one electric motor (10), said electric motor (10) being in particular positioned with respect to said shell (3) in accordance with at least one predetermined spatial arrangement,

wherein said electric motor (10) comprises a stator (11) and a rotor (12), said rotor (12) being in particular arranged outside said stator (11),
wherein said rotor (12) is at least partially configured to act, in a condition of use of said device (2), as a payload (4) of said device (2).

In a second aspect of the invention, dependent on the first aspect, said rotor (12) is at least partially configured to act, in a condition of use of said device (2), as a cutting member intended in particular to cut the grass of said land (1).

In a third aspect of the invention, dependent on the second aspect, said rotor (12) comprises:
- a core (13) having a substantially axially symmetrical shape, in particular such as to allow said stator (11) to be enclosed by said core (13),
- a hub (14) configured to be housed in a seat (11a) of said stator (11) in particular by interposing one or more bearings (15) and connected to said core (13), so as to allow said core (13) to be rotatably mounted with respect to said stator (11), and
- at least one cutting element (4a) constrained to said core (13) and extending from said core (13) away from said stator (11).

In a fourth aspect of the invention, dependent on the third aspect, said electric motor (10) is of the brushless type, said stator (11) comprising a plurality of windings (16) and said rotor (12) comprising a plurality of permanent magnets (17), said permanent magnets (17) being integrated with said core (13) or fixed to said core (13).

In a fifth aspect of the invention, dependent on the third aspect or the fourth aspect, said cutting element (4a) comprises at least one blade protruding from said core (13) along a substantially radial or mainly radial direction.

In a sixth aspect of the invention, dependent on any one of the aspects from the third aspect to the fifth aspect, said cutting element (4a) is made in a single body with said core (13).

In a seventh aspect of the invention, dependent on any one of the aspects from the third aspect to the fifth aspect, said cutting element (4a) is made as a component of said rotor (12) distinct from said core (13) and constrained to said core (13) by means of assembly of said cutting element (4a) to said core (13).

In an eighth aspect of the invention, dependent on the seventh aspect, the assembly between said cutting element (4a) and said core (13) is of a removable type, so as to allow a separation of said cutting element (4a) in particular for the purpose of cleaning or sharpening or maintenance or replacement of the cutting element (4a).

In a ninth aspect of the invention, dependent on the seventh aspect or the eighth aspect, the assembly between said cutting element (4a) and said core (13) is such as to suppress any degree of freedom between said cutting element (4a) and said core (13), the assembly between said cutting element (4a) and said core (13) being in particular obtained by means of a screw or bolt connection.

In a tenth aspect of the invention, dependent on the seventh aspect or the eighth aspect, the assembly between said cutting element (4a) and said core (13) is such as to establish a rotational degree of freedom between said cutting element (4a) and said core (13), the assembly between said cutting element (4a) and said core (13) being in particular obtained by means of a hinge connection.

In an eleventh aspect of the invention, dependent on any one of the aspects from the third aspect to the tenth aspect, said hub (14) is obtained integrally with said core (13) or rigidly coupled to said core (13), in particular by means of a connecting member such as a tab or a key or by means of a direct connection such as an interference connection or by means of threading.

In a twelfth aspect of the invention, dependent on any one of the aspects from the third aspect to the tenth aspect, said hub (14) is coupled to said core (13) by means of a safety arrangement configured to determine a temporary decoupling of said core (13) from said hub (14) in the occurrence of impacts. In a thirteenth aspect of the invention, dependent on any one of the aspects from the third aspect to the twelfth aspect, said rotor (12) comprises a plurality of cutting elements (4a), preferably two to twelve cutting elements (4a), more preferably two to eight cutting elements (4a), even more preferably two to six cutting elements (4a).

In a fourteenth aspect of the invention, dependent on the thirteenth aspect, said cutting elements (4a) are substantially angularly equidistant from each other.

In a fifteenth aspect of the invention, dependent on the thirteenth aspect or the fourteenth aspect, said cutting elements (4a) are substantially identical to each other in terms of size and/or geometry and/or material.

In a sixteenth aspect of the invention, dependent on any one of the aspects from the third aspect to the fifteenth aspect, said core (13) is at least partially made of plastic material, said core (13) being in particular obtained by means of an injection moulding or co-moulding technique.

In a seventeenth aspect of the invention, dependent on any one of the aspects from the third aspect to the sixteenth aspect, the axis of said core (13), in a condition of use of said device, is ideally orthogonal to the ground or has a predetermined inclination with respect to the ground.

In an eighteenth aspect of the invention, dependent on any one of the aspects from the first aspect to the seventeenth aspect, said device (2) exhibits at least one cavity (18), said cavity (18) being in particular located at a face intended to be directed towards the land (1) in a condition of use of said device, said stator (11) being housed, preferably entirely housed, in said cavity (18).

In a nineteenth aspect of the invention, dependent on the eighteenth aspect, said rotor (12) is at least partially configured to act, in a condition of use of said device, as a ventilation member, in particular intended to establish, in said cavity (18), a forced air flow intended to promote an evacuation of cut grass from said cavity (18) and/or to allow a cooling of said stator (11) by forced convection.

In a twentieth aspect of the invention, dependent on the eighteenth aspect or on the nineteenth aspect, a cap (21) is obtained in a single piece with said shell (3) or rigidly connected to said shell (3) and said cavity (18) is delimited by said cap (21), said cavity (18) being alternatively formed by an opening of said shell (3).

In a twenty-first aspect of the invention, dependent on the eighteenth aspect or the nineteenth aspect, said device (2) further comprises a cutting plate (20) applied to said shell (3) and configured so as to define a cap (21) and in which said cavity (18) is delimited by said cap (21).

In a twenty-second aspect of the invention, dependent on the twentieth aspect or on the twenty-first aspect, said cap (21) is made of plastic material or of metallic material.

In a twenty-third aspect of the invention, dependent on any one of the aspects from the twentieth aspect to the twenty-second aspect, said cap (21) does not have holes, except for possible holes configured for the passage of electrical wiring and possible holes configured for the passage of fixing members of said stator (11), for example screws or bolts, said cap (21) in particular not having holes for the passage of drive shafts or transmission members, for example belts.

In a twenty-fourth aspect of the invention, dependent on any one of the aspects from the twentieth aspect to the twenty-third aspect, thermal dissipation means (22) are associated with said cap (21) near said stator (11), said thermal dissipation means (22) being arranged outside said cavity (18) and being suitable, in a condition of use of said device, to determine a dissipation of the heat generated by said stator (11).

In a twenty-fifth aspect of the invention, dependent on the twenty-fourth aspect, said thermal dissipation means (22) are of the passive type and comprise in particular a finned surface (23).

In a twenty-sixth aspect of the invention, dependent on the twenty-fifth aspect, said thermal dissipation means (22) are integrated in said cap (21), preferably obtained in a single piece with said cap (21).

In a twenty-seventh aspect of the invention, dependent on any one of the aspects from the twentieth aspect to the twenty-sixth aspect, adjustment means (30) of the cutting height are associated with said shell (3) and/or said cutting plate (20) and are configured to allow a variation of the height assumed, in a condition of use of said device, by said rotor (12) with respect to the ground, said adjustment means being adapted to determine a relative movement of said rotor (12) with respect to said shell (3) or of said cutting plate (20) with respect to said shell (3), said relative movement occurring substantially along a direction substantially orthogonal to the ground.

In a twenty-eighth aspect of the invention, dependent on any one of the aspects from the eighteenth aspect to the twenty-seventh aspect, the device further comprises power and driving means (24) of said stator (11), said power and/or driving means being configured to circulate in said stator (11) a current such as to generate a variable magnetic field and consequently to induce a controlled rotation of said rotor (12) around said stator (11), in particular said power and/or driving means being configured to allow a control of the position and/or speed and/or acceleration of said rotor (12).

In a twenty-ninth aspect of the invention, dependent on the twenty-eighth aspect, said power and/or driving means (24) are configured to induce a rotation of said rotor (12) at a speed comprised between 2800 rpm and 3200 rpm.

In a thirtieth aspect of the invention, dependent on the twenty-eighth aspect or the twenty-ninth aspect, said power and/or driving means (24) are arranged at least partly inside said cavity (18).

In a thirty-first aspect of the invention, dependent on the twenty-eighth aspect or the twenty-ninth aspect, said power and/or driving means (24) are arranged entirely outside said cavity (18).

In a thirty-second aspect of the invention, dependent on any one of the aspects from the first aspect to the thirty-first aspect, the device comprises a plurality of electric motors (10), each among the electric motors of said plurality comprising a respective stator (11) and a respective rotor (12), each rotor (12) being in particular arranged outside the respective stator (11), each rotor (12) being at least partially configured to act, in a condition of use of said device, as a payload (4) of said device, in particular as a cutting member and/or as a ventilation member.

In a thirty-third aspect of the invention, dependent on the thirty-second aspect, the rotors (12) of the electric motors of said plurality are substantially identical to each other in terms of size and/or geometry and/or material.

In a thirty-fourth aspect of the invention, dependent on the thirty-second aspect or the thirty-third aspect, the rotors (12) of the electric motors of said plurality are housed in a same cavity (18) delimited by a cap (21) defined by said shell (3) or by a cutting plate (20) applied to said shell (3).

In a thirty-fifth aspect of the invention, dependent on any one of the aspects from the first aspect to the thirty-fourth aspect, said device (2) is a self-driving robot lawnmower (2a).

In a thirty-sixth aspect of the invention, dependent on any one of the aspects from the first aspect to the thirty-fifth aspect, said device (2) is a lawnmower tractor (2b) with driver on board.

In a thirty-seventh aspect of the invention, dependent on any one of the aspects from the first aspect to the thirty-sixth aspect, said device (2) is a pushed lawnmower (2c) with driver on foot, said pushed lawnmower optionally comprising a cut grass collection bag (32).

In a thirty-eighth aspect of the invention, dependent on any one of the aspects from the first aspect to the thirty-seventh aspect, said device (2) is a lawnmower of the air cushion type (2d).

In a thirty-ninth aspect of the invention, dependent on the thirty-eighth aspect, the device further comprises an impeller (31) configured to generate, in a condition of use of said device, an air flow directed towards the ground and intended to generate a force suitable for keeping the device (2) raised with respect to the ground, said impeller (31) being in particular integral with said rotor (12) and/or coaxial to said rotor (12).

In a fortieth aspect of the invention, dependent on the thirty-ninth aspect, an ideal line being taken intersecting said shell (3) at a first point, said impeller (31) at a second point, said stator (11) at a third point and said rotor (12) at a fourth point, said second point results interposed between said first point and said third point and/or said third point is interposed between said second point and said fourth point.

A forty-first aspect of the present invention is an independent aspect and has as its object a manufacturing method (100) of a land maintenance device, in particular for cutting grass, comprising the steps of:
i) arranging an electric motor (10) by assembling a stator (11) and a rotor (12) together and
ii) configuring said rotor (12) so as to be able to act, in a condition of use of said device, as a payload (4) of said device, in particular as a cutting member and/or ventilation member, said steps i) and ii) can be executed in any order.

In a forty-second aspect of the invention, dependent on the forty-first aspect, said step i) comprises the sub-step of arranging said rotor (12) outside said stator (11).

In a forty-third aspect of the invention, dependent on the forty-first aspect or on the forty-second aspect, said step ii) comprises the sub-step of obtaining at least one cutting element (4a), in particular a blade, in a single piece with said rotor (12), said cutting element (4a) projecting from a core (13) of said rotor (12) along a substantially radial or mainly radial direction.

In a forty-fourth aspect of the invention, dependent on the forty-first aspect or the forty-second aspect, said step ii) comprises the sub-steps of making at least one cutting element (4a), in particular a blade, separately from said rotor (12) and of assembling said cutting element (4a) to a core (13) of said rotor (12), said cutting element (4a) projecting, following the assembly, from said core (13) along a substantially radial or mainly radial direction.

In a forty-fifth aspect of the invention, dependent on the forty-fourth aspect, the assembly between said cutting element (4a) and said core (13) is of a removable type, so as to allow a separation of said cutting element (4a) following said assembly.

In a forty-sixth aspect of the invention, dependent on the forty-fourth aspect or the forty-fifth aspect, the assembly between said cutting element (4a) and said core (13) is such as to suppress any degree of freedom between said cutting element (4a) and said core (13) and is in particular obtained by means of a screw or bolt connection.

In a forty-seventh aspect of the invention, dependent on the forty-fourth aspect or on the forty-fifth aspect, the assembly between said cutting element (4a) and said core (13) is such as to establish a rotational degree of freedom between said cutting element (4a) and said core (13) and is in particular obtained by means of a hinge connection.

In a forty-eighth aspect of the invention, dependent on any one of the aspects from the forty-first aspect to the forty-seventh aspect, said step ii) comprises the sub-step of providing said rotor (12) with a plurality of cutting elements (4a), in particular with a plurality of cutting elements (4a) substantially identical to each other in terms of size and/or geometry and/or material, said plurality of cutting elements (4a) preferably comprising from two to twelve cutting elements (4a), more preferably from two to eight cutting elements (4a), still more preferably from two to six cutting elements (4a), optionally in which said cutting elements (4a) are substantially angularly equidistant from each other.

In a forty-ninth aspect of the invention, dependent on any one of the aspects from the forty-first aspect to the forty-eighth aspect, said method further comprises the steps of:
iii) arranging a shell (3) for said device,
iv) associating a cap (21) to said shell (3) configured so as to delimit at least one cavity (18) and
v) positioning said stator (11) in said cavity (18),
said steps i), ii), iii), iv) and v) can be executed in any order.

In a fiftieth aspect of the invention, dependent on the forty-ninth aspect, said step iv) is executed simultaneously with said step iii) and is executed by shaping a portion of said shell (3) so as to define said cap (21).

In a fifty-first aspect of the invention, dependent on the forty-ninth aspect, said step iv) is executed separately from said step iii) and comprises the sub-steps of making said cap (21) in the form of a structural component of said device and of rigidly connecting said structural component to said shell (3), said structural component comprising in particular at least one element in plastic material obtained in particular by means of a moulding or injection co-moulding technique.

In a fifty-second aspect of the invention, dependent on the forty-ninth aspect, said step iv) is executed separately from said step iii) and comprises the sub-steps of making said cap (21) in the form of a cutting plate (20) and of applying said cutting plate (20) to said shell (3).

In a fifty-third aspect of the invention, dependent on any one of the aspects from the forty-ninth aspect to the fifty-second aspect, said step iv) comprises the sub-step of obtaining thermal dissipation means (22) in a single piece with said cap (21), said thermal dissipation means (22) comprising in particular a finned surface (23).

In a fifty-fourth aspect of the invention, dependent on any one of the aspects from the forty-ninth aspect to the fifty-third aspect, following said step v), said stator (11) is entirely housed in said cavity (18).

In a fifty-fifth aspect of the invention, dependent on any one of the aspects from the forty-ninth aspect to the fifty-fourth aspect, said method further comprises the steps of:
vi) preparing at least one further electric motor (10) by assembling a further stator (11) and a further rotor (12) together,
ii) configuring said further rotor (12) so as to be able to act, in a condition of use of said device, as a payload (4) of said device, in particular as a cutting member and/or ventilation member and
viii) positioning said further stator (11) in said cavity (18),
said steps i), ii), iii), iv), v), vi), vii) and viii) can be executed in any order.

A fifty-sixth aspect of the present invention is an independent aspect and has as its object an operating method of a land maintenance device, in particular for cutting grass, said device comprising:
- at least one payload (4), in particular at least one cutting member, and
- an electric motor (10) configured to activate and/or operate said payload (4),
comprising the step of drawing heat from said electric motor (10) by forced convection by means of a ventilation flow induced by said payload (4).

### BRIEF DESCRIPTION OF THE DRAWINGS

Some embodiments of the invention will be described hereinafter with reference to the accompanying drawings, given merely for illustrative, non-limiting purposes in which:
- Figure 1 is a perspective view of a mobile device of the robot lawnmower type in accordance with the present invention;
- Figure 2 is a bottom view of a mobile device of the robot lawnmower type in accordance with the present invention;
- Figure 3 is a sectional view of figure 2;
- Figure 4 is a perspective view of a mobile device of the pushed lawnmower type in accordance with the present invention;
- Figure 5 is a sectional view of figure 4;
- Figure 6 is a perspective view of a mobile device of the lawnmower with air cushion type in accordance with the present invention;
- Figure 7 is a sectional view of figure 6;
- Figure 8 is a sectional view of the electric motor of the payload in accordance with the present invention;
- Figure 9 is a perspective view of an optional embodiment of a cutting plate of the mobile device in accordance with the present invention;
- Figure 10 is a sectional view of figure 9;
- Figure 11 is an exploded view of an optional embodiment of a cutting plate of the mobile device in accordance with the present invention;
- Figure 12 is a sectional view of a mobile device of the lawnmower tractor type in accordance with the present invention;
- Figure 13 is a detailed view of the section of figure 12;
- Figure 14 is a top view of a mobile device of the lawnmower tractor type in accordance with the present invention;

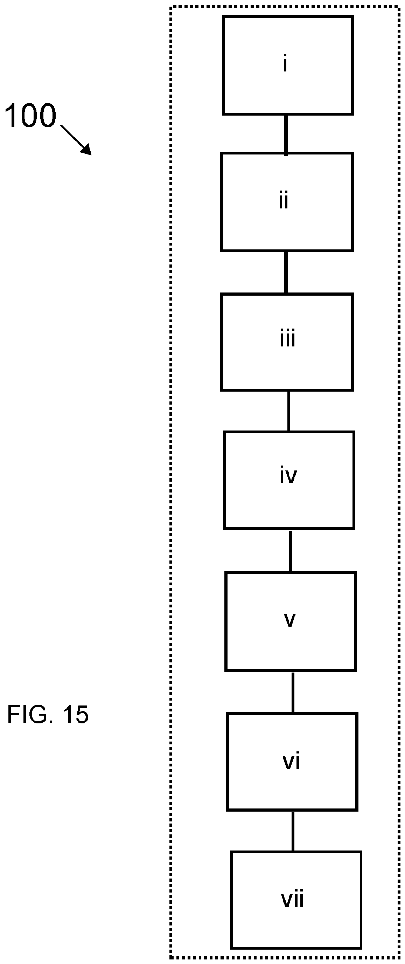

- Figure 15 is a flowchart comprising the main steps for manufacturing a mobile device in accordance with the present invention.

It should be noted that in the present detailed description, corresponding parts illustrated in the various figures are indicated with the same numerical references. The figures could illustrate the object of the invention through non--scale depictions; therefore, the parts and components illustrated in the figures related to the object of the invention could exclusively relate to schematic depictions.

### DETAILED DESCRIPTION

### Mobile Device 2

The present disclosure relates to a device 2, also called mobile device 2, configured to move and execute maintenance operations within a working area of land 1, such as turfgrass, a garden, or agricultural land, having an extension comprised between 10 and 20000 square meters, in particular between 500 and 10000 square meters: the maintenance operations can comprise, for example, cutting turfgrasses, soil aeration, soil tillage, sowing, and harvesting in a plantation or the like. In particular, the mobile device 2 can be, for example, a lawnmower as shown in the accompanying drawings 1, 3, 7 and 12. Alternatively the mobile device 2 can be a tiller, a subsoiler, an aerator or the like.

The mobile device 2 can be a manually-driven device or a self-driving device.

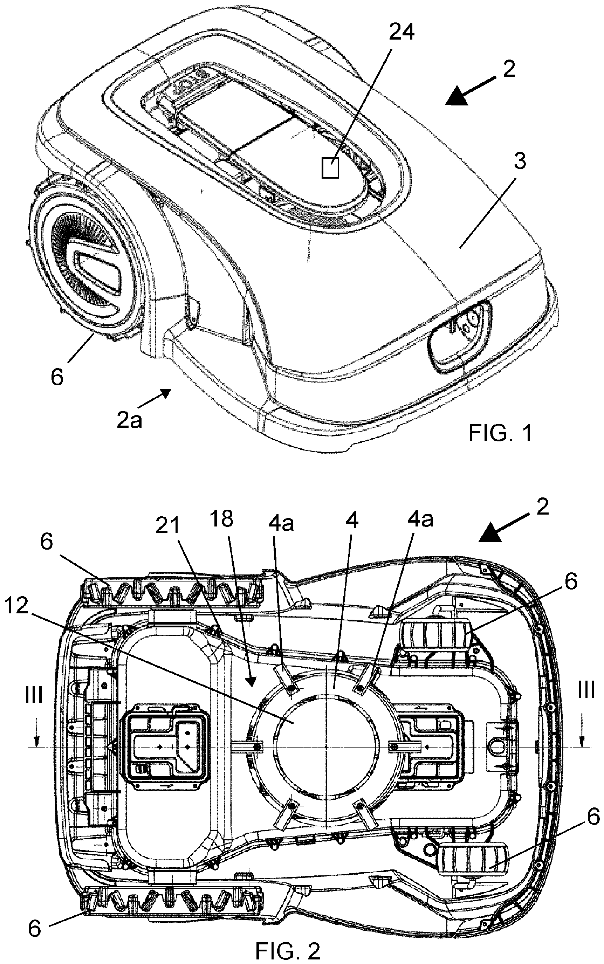

The mobile device 2 can be a self-driving robot lawnmower 2a, shown in figures 1, 2 and 3. The robot lawnmower 2a comprises the driving movement means 6 and is further configured to move and drive autonomously within the working area 1 by means of the use of one or more sensors, so as to orientate itself and avoid obstacles within the working area, as per the prior art. For example, the self-driving robot lawnmower 2a can comprise one or more proximity sensors and/or one or more position sensors configured to send signals to a controller configured to control the driving movement means 6 to guide the mobile device 2 within the working area 1 to carry out the maintenance activities. The self-driving mobile device 2 can have a length comprised between 50 cm and 150 cm a width comprised between 30 cm and 125 cm.

The robot lawnmower 2a can comprise one or more electric motors operatively connected to the driving movement means to determine the movement of the robot.

The robot lawnmower 2a can comprise a rechargeable on-board battery having a charging capacity comprised between 2.5 Wh and 40 Wh and configured to electrically power the driving movement means. The battery can be configured to deliver a voltage preferably between 24 Volts and 48 Volts. In more detail, the battery can be configured to deliver a current, during a standard operating condition, comprised between 2 Amperes and 5 Amperes for self-driving robots. The battery can be a rechargeable battery via a power outlet of a home network, for example a 110V, 200V, 230V, 380V or 400V power source.

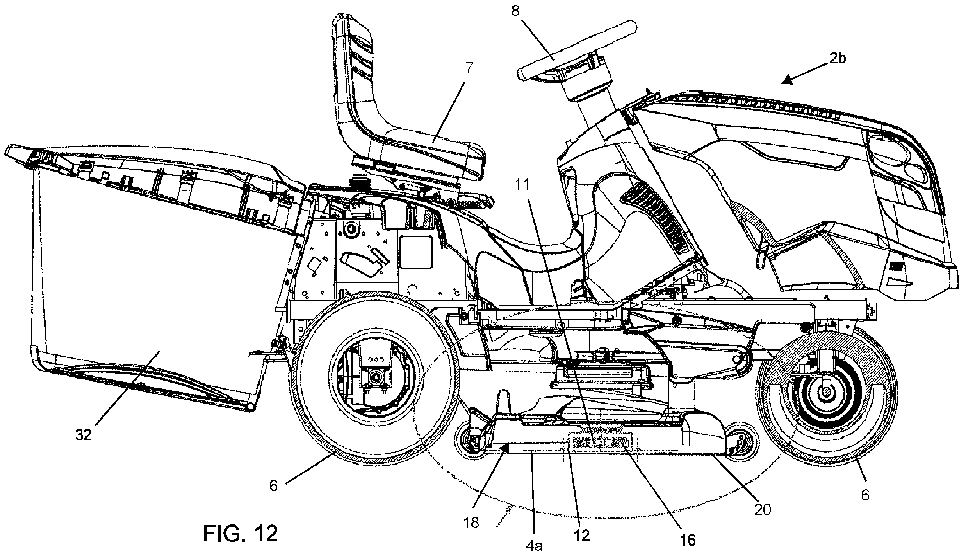

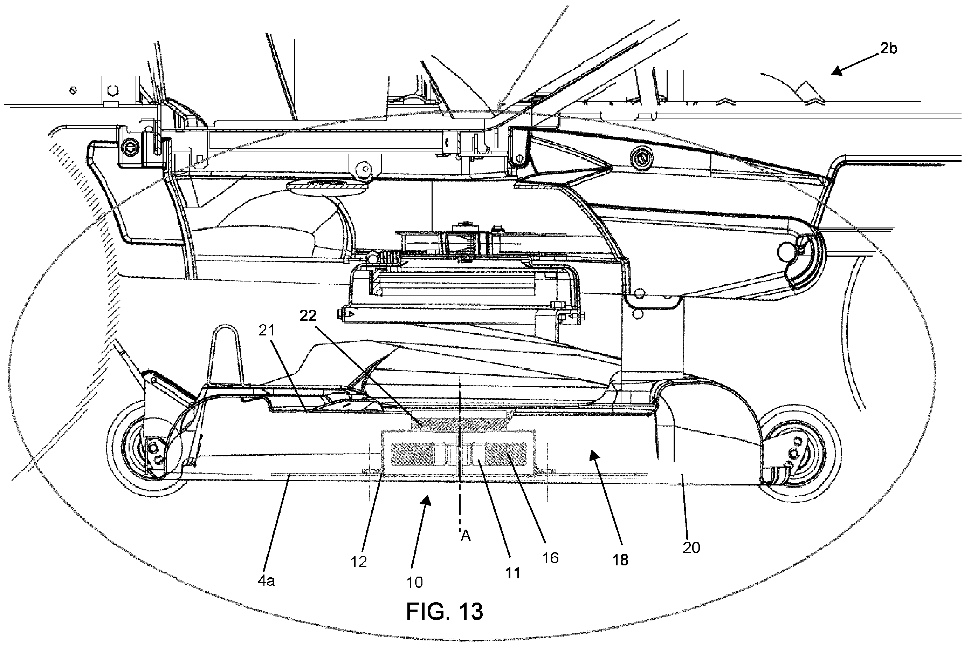

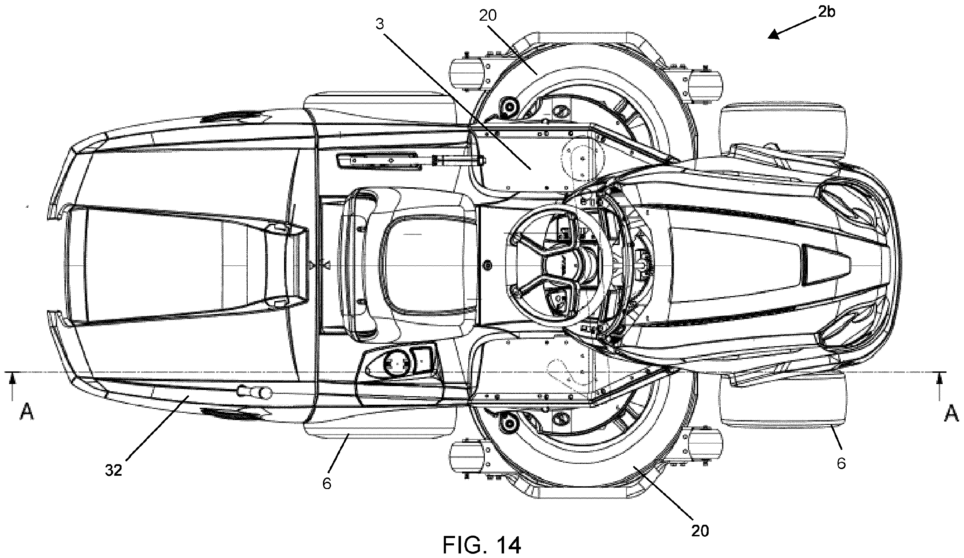

Alternatively, the mobile device 2 can be a lawnmower tractor 2b, for example of the type shown in figures 12 to 14, comprising a driving station 7 for accommodating the operator on board, the latter adapted to drive the tractor inside the working area. The lawnmower tractor 2b further comprises at least one steering member 8, for example a handlebar or a steering wheel, operated by the driver and configured to steer the tractor 2b in a direction desired by the operator. The lawnmower tractor 2b comprises driving movement means 6, for example one or more traction wheels, adapted to determine the advancement of the mobile device 2. An electric motor can be connected to the movement means 6 of the lawnmower tractor 2b to cause the movement: such a motor can have a nominal power comprised between 1.5 kW and 10 kW in the case of a tractor with a driver's seat for an operator. Alternatively, the lawnmower tractor 2b can comprise an internal combustion engine operatively connected to driving movement means 6 to determine the movement thereof. The internal combustion engine can have a maximum power comprised between 3 kW and 200 kW.

The lawnmower tractor 2b preferably has a width comprised between 65 cm and 200 cm. Alternatively, the lawnmower tractor 2b can reach dimensions in length up to 6 metres: in this case the motor is preferably an internal combustion engine.

The lawnmower tractor 2b can comprise a rechargeable on-board battery having a charging capacity comprised between 5 Wh and 40 Wh and configured to electrically power the driving movement means. The battery can be configured to deliver a voltage preferably between 24 Volts and 48 Volts. In more detail, the battery can be configured to deliver a current, during a standard operating condition, between 2 Amperes and 20 Amperes. The battery can be a rechargeable battery via a power outlet of a home network, for example a 110V, 200V, 230V, 380V or 400V power source.

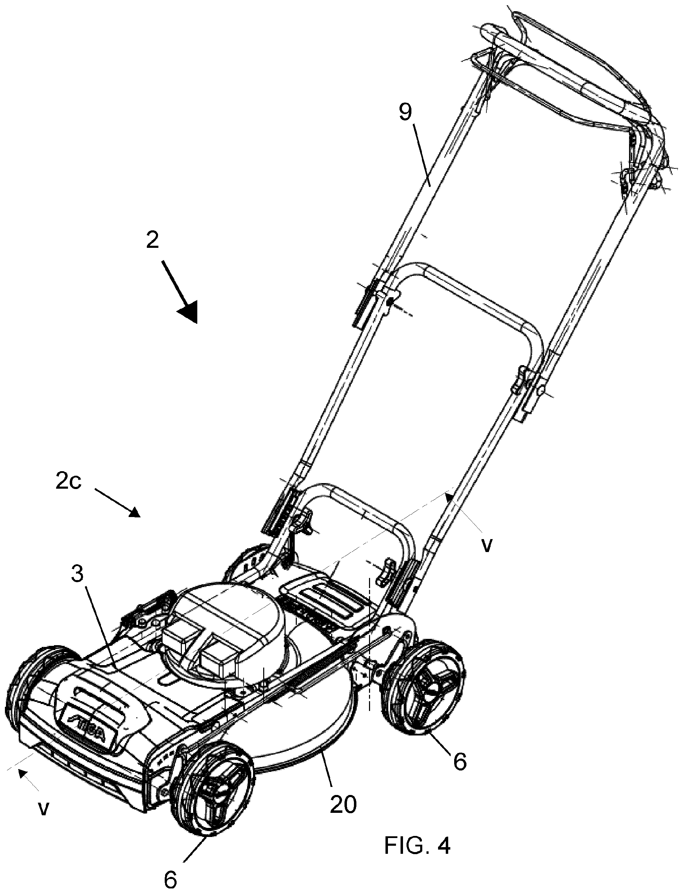

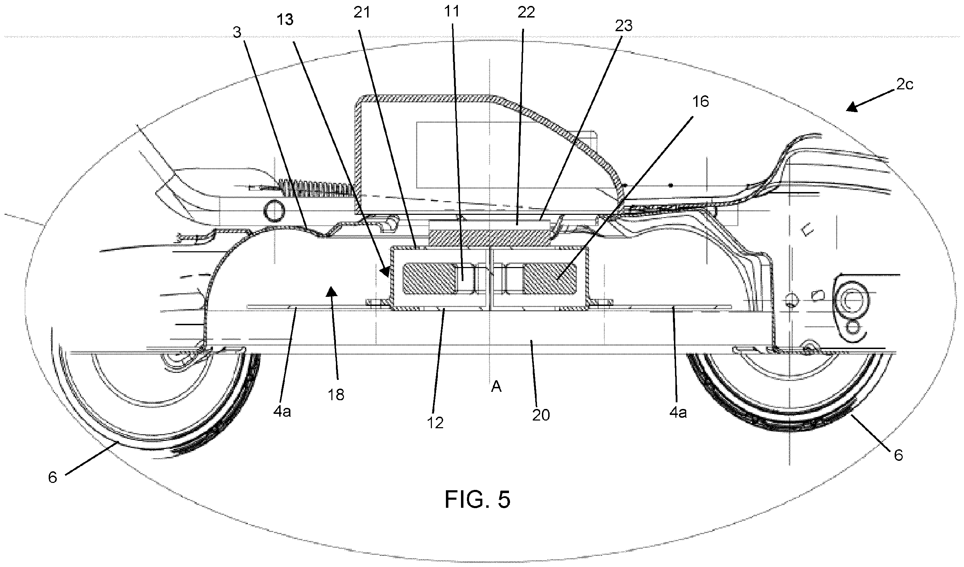

Alternatively, the mobile device 2 can be a manually-driven pushed lawnmower 2c, as shown in figures 4 and 5. In such a case the mobile device 2 can comprise an operating handle 9 to allow the operator to move and guide the mobile device 2 within the working area 1. It should be noted that the mobile device 2 must have dimensions and mass consistent with the need to be pushed by the user inside the working area 1. The pushed lawnmower 2c does not comprise a driver's seat for the operator. The pushed lawnmower 2c can comprise driving or idle movement means 6. If the movement means 6 are driving, the mobile device 2 can comprise one or more electric motors optionally connected to an on-board controller and to at least one drive wheel of the mobile device 2 to determine the advancement movement thereof. The electric motor of the driving movement means 6 of the pushed lawnmower 2c can have a nominal power comprised between 500 W and 2000 W, in particular between 1300 W and 1500 W.

The pushed lawnmower 2c can comprise a rechargeable on-board battery having a charging capacity comprised between 2.5 Wh and 40 Wh and configured to electrically power the driving movement means. The battery can be configured to deliver a voltage preferably between 24 Volts and 48 Volts. In more detail, the battery can be configured to deliver a current, during a standard operating condition, between 2 Amperes and 5 Amperes. The battery can be a rechargeable battery via a power outlet of a home network, for example a 110V, 200V, 230V, 380V or 400V power source.

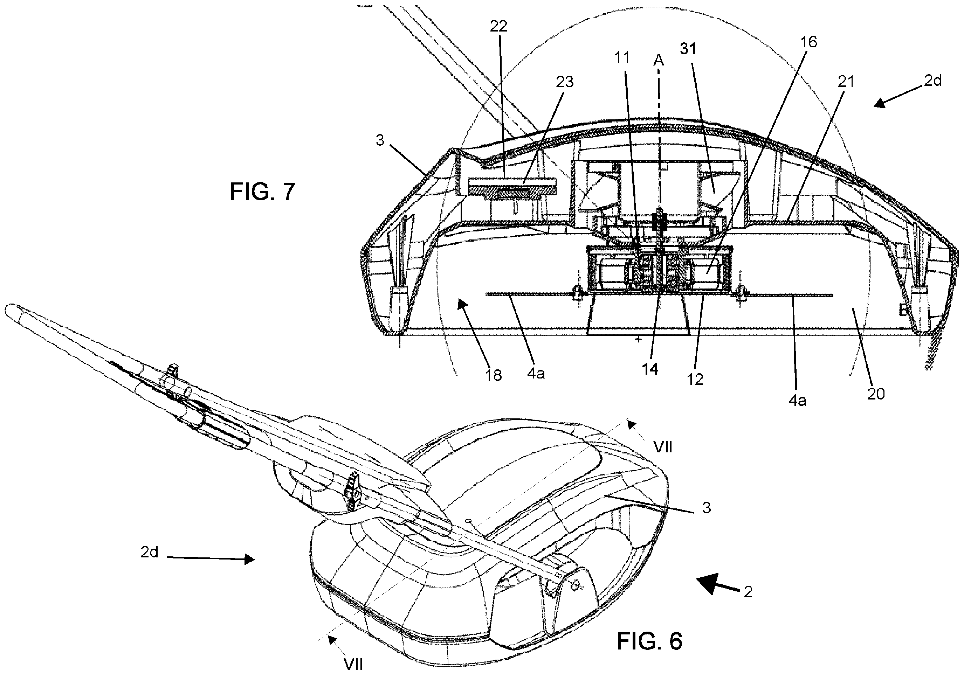

In another embodiment, the mobile device can be a lawnmower of the air cushion type 2d, of the type shown in figures 6 and 7. The air-cushion type lawnmower 2d comprises an impeller 31 (advantageously made of plastic material) configured to generate a thrust of air towards the ground so as to support the lawnmower in height. The impeller 31 is movable by rotation and placed in rotation by means of an electric motor 10 of the type as described in the next section: such an electric motor 10 is also mechanically connected to a payload 4, for example a cutting element 4a, in particular a blade. The rotation speed of the impeller 31 and its geometry are defined by the person skilled in the art to obtain, as a technical effect, the suspension of the lawnmower 2d above the ground, in particular at a distance from the ground comprised between 1 cm and 5 cm.

The mobile device 2, in accordance with each of the above-described embodiments, i.e., in accordance with the robot lawnmower 2a, the lawnmower tractor 2b, the pushed lawnmower 2c and the air cushion lawnmower 2d, comprises at least one payload 4, for example a work tool configured to execute maintenance operations in the working area 1. In particular, the payload 4 can comprise a cutting element 4a adapted to allow, for example, mowing the turfgrass. The payload 4 can comprise a single rotating blade, or a plurality of rotating blades.

The mobile device 2 of the present invention comprises a support frame carrying the movement means 6, whether driving or idle, and one or more payloads, for example one or two payloads, configured to execute maintenance operations within the working area 1. In detail, the movement means 6 can comprise wheels, in particular two, three or four wheels, or tracks. The wheels can be arranged at respective four vertices of the support frame 2, defining a rectangular or square polygonal shape.

The mobile device 2 extends in length between the front portion and the rear portion, defining a longitudinal axis X of the mobile device 2. In particular, the longitudinal axis X of the mobile device 2 crosses the front portion and the rear portion in a substantially orthogonal manner. In greater detail, the longitudinal axis X of the mobile device 2 can define an axis of symmetry between the left side and the right side of the mobile device 2 and pass through a central portion of the mobile device 2 itself. Similarly, a straight advancement of the mobile device 2 can be coincident with the longitudinal axis X of the mobile device 2. Furthermore, the longitudinal axis X can be substantially orthogonal to the front and/or rear wheel axis of the mobile device 2 at least during a straight motion condition. Furthermore, the longitudinal axis X can be equidistant from the left and right wheels of the same axis: in such a case the longitudinal axis defines a central longitudinal axis of the mobile device 2. In particular the longitudinal axis X, in the present description, is considered placed centrally in the mobile device 2. The movement means 6 define a support plane SP for the mobile device 2: in fact, such a support plane SP is coincident with the ground during an operating condition of the mobile device 2. In more detail, the support plane is through the contact points between the wheels of the mobile device 2 and the land 1 on which the mobile device 2 is arranged.

If the mobile device 2 is a lawnmower and comprises a rotating blade, such a rotating blade is movable around a rotation axis A which is transverse or substantially orthogonal to the support plane SP.

The movement means 6 can also define a straight advancement of the mobile device 2 along a longitudinal advancement direction which is substantially coincident with the longitudinal axis X of the mobile device 2: in particular, the longitudinal advancement direction is substantially orthogonal to a rotation axis of the wheels of the mobile device 2. Such a longitudinal advancement direction is substantially parallel to the support plane SP. Similarly, the longitudinal axis X is parallel to the support plane SP.

The mobile device 2 also extends in height along a vertical axis Z orthogonal to the longitudinal axis X and to the support plane SP. In other words, the longitudinal axis X is orthogonal, when the mobile device 2 is resting on the ground on its own movement means 6, to the ground itself.

The mobile device 2 can comprise an operating unit which is movable in height along the vertical axis Z, between a distal position and a close position with respect to the support plane SP. In particular, during an operating condition, the operating unit can be movable in height along the vertical axis Z between a distal position and a close position with respect to the ground, to allow a variation of the cutting height. A change along the vertical axis Z of the operating unit causes a simultaneous change in height of the payload, and consequently a change in the distance between the payload 4 and the ground and/or support plane.

Furthermore, the mobile device 2 extends in width along a transverse axis W between a left side, interposed in connection between the front portion and the rear portion of the mobile device 2, and a right side, also interposed in connection between the front portion and the rear portion of the mobile device 2, the right side being opposite and spaced with respect to the left side. In particular, the transverse axis W is orthogonal to the longitudinal axis X and to the vertical axis Z.

Thus, the longitudinal axis X, the transverse axis W and the vertical axis Z define a reference system of the mobile device 2. The origin of the reference system can be the mass or geometric centre of gravity of the mobile device 2.

In accordance with such a reference system, the rotation axis A of the rotating blade is substantially parallel or coincident with the vertical axis Z of the mobile device 2. The axis of the front wheels and/or rear wheels is parallel to the transverse axis W and optionally substantially parallel to the support plane SP.

The mobile device 2 comprises a shell 3, made of one among a plastic, composite, and metal material or a combination thereof, and carrying the electric motor 10 of the payload. The shell 3 can further define, in part or in full, the frame of the mobile device. The shell 3 can further carry the movement means 6, for example the wheels of the robot lawnmower 2a, or of the lawnmower tractor 2b, or of the pushed lawnmower 2c. The shell 3 can further carry the on-board battery and optionally the on-board controller.

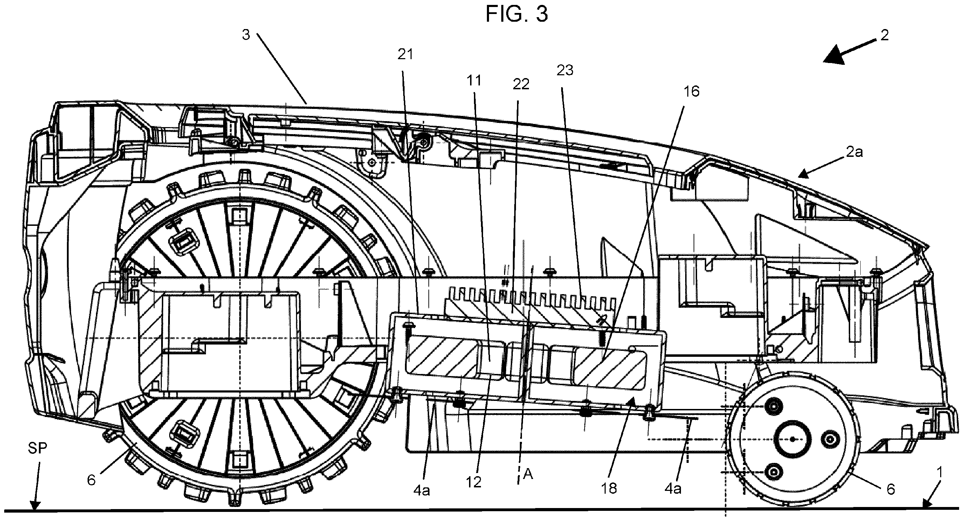

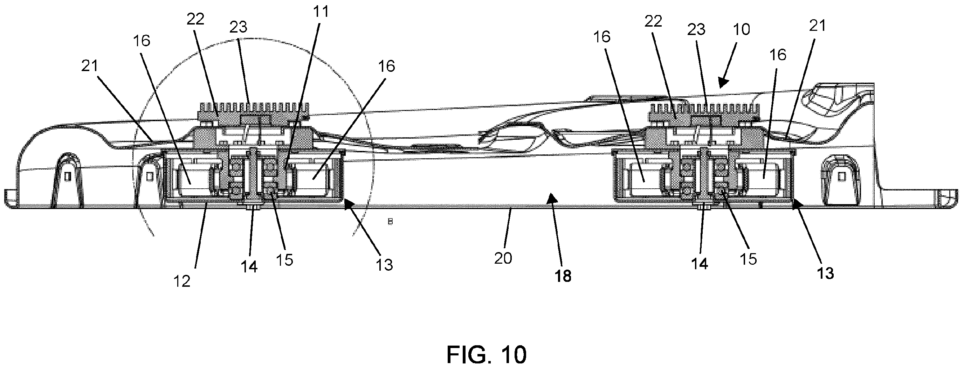

The mobile device 2 can comprise a cap 21 internally defining a cavity 18, as shown in the sectional views of figures 3, 5, 7, 8, 10 and 13. The cap 21 can be obtained in a single piece with the shell 3, or it can be rigidly connected to the shell 3. In particular, the cap 21 can have a curved and/or concave shape, having side walls extending in height and a top wall connected to the side walls, to internally define the cavity 18. A surface inside the cap 21 and delimiting the cavity 18 therefore has a concave shape, intended, during a condition of use of the mobile device 2, to be facing the land 1.

The cavity 18 is primarily intended to house the payload 4, i.e., one or more cutting elements 4a rotating inside the cavity 18, whereby the cap 21 surrounding the cavity 18 is consequently intended to enclose the payload 4 therein, so as to protect an operator from contact with the cutting elements 4a and to avoid the lateral exit of stones, grass, or the like which can in particular injure or strike the operator. The cap 21 can further be designed to convey the cut grass towards an ejection channel extending between the cap 21 and an output section, a collection bag 32 being able to be connected to the output section of the ejection channel to collect the cut grass. The collection bag 32 can preferably be used in association with the lawnmower tractor 2b and the pushed lawnmower 2c, while the robot lawnmower 2a and the air cushion-type lawnmower 2d typically operate in mulching mode.

The cap 21 is made from one among a plastic, composite, and metal material or a combination thereof. In an embodiment, the cap 21 has no holes, with the exception of possible holes configured for the passage of electrical wiring and of possible holes configured for the passage of fixing members, for example screws or bolts. In particular, the cap 21 does not have holes for the passage of drive shafts or transmission members, for example belts.

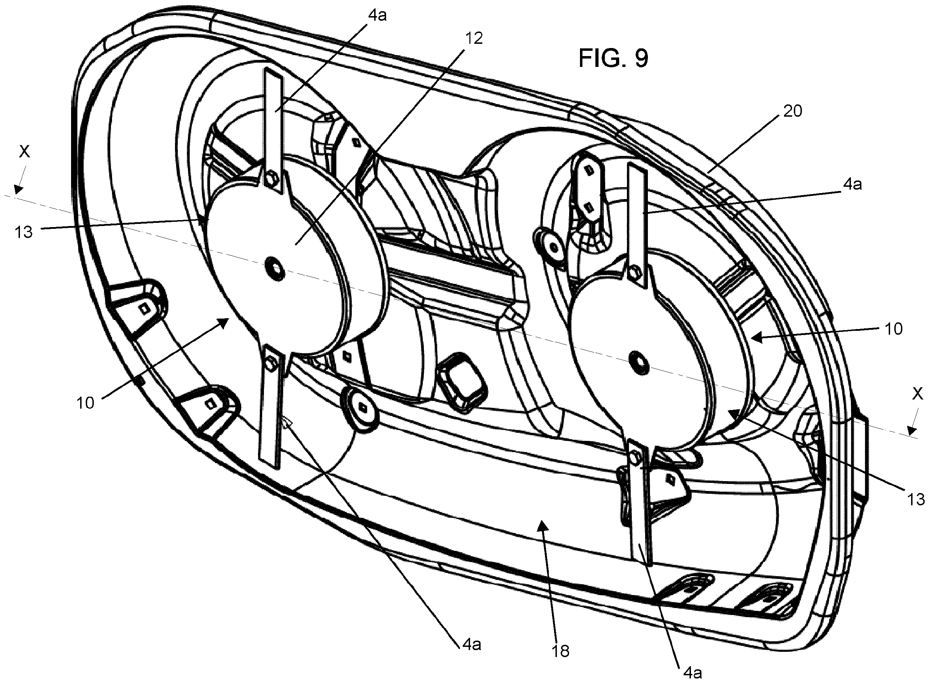

The device 2 further comprises a cutting plate 20 applied to the shell 3 and configured so as to define the cap 21, the cavity 18 being delimited by the cap 21 itself. The cutting plate 20 can be defined as "*single*"*,* i.e., in which the cutting plate comprises a single cap 21 housing one and only one payload 4. Alternatively, the cutting plate 20 can be "*double*", i.e., in which the cutting plate comprises two caps 21 side by side, in which each cap houses a respective payload 4, so that, in such an embodiment, the cutting plate 20 carries two payloads 4, for example two rotating blades side by side, as shown in figures 9 to 14. It should be noted that such an embodiment comprising two payloads is advantageously associated with the lawnmower tractor 2b, but can also be applied to the robot lawnmower 2a, to the lawnmower machine 2c and to the lawnmower of the air cushion type 2d. The rotation axes of each payload 4 are arranged along a direction extending along the width of the mobile device 2, so as to increase the size in width of the cutting plate. This allows the cutting extension to be increased in width during a condition of use of the mobile device. Having described in detail a double cutting plate 20, it is intended to point out how, according to the present invention, the cutting plate can more generally be "*multiple*", i.e., it can accommodate payloads for cutting grass in a number equal to two or three or four or five or six or seven or eight or nine or ten or in a number greater than ten, said payloads being rotatable with respect to respective rotation axes substantially parallel to each other. In the case of a double or multiple cutting plate, the payloads can be synchronised with each other, so as to avoid possible collisions during operation. If the payloads are instead not synchronised with each other, at least two of the payloads are staggered along the longitudinal axis X of the mobile device 2, i.e., along the advancement direction of the mobile device 2.

The mobile device 2 can comprise cutting height adjustment means 30 configured to vary the distance between the payload and the ground: in particular the cutting height adjustment means 30 are configured to vary the distance between the payload and the support plane SP defined by the movement means 6. The adjustment means 30 can be associated with the shell 3 and/or the cutting plate 20 and are configured to allow a variation of the height assumed, in a condition of use of the device, by the payload with respect to the ground. Furthermore, the adjustment means can be adapted to determine a relative movement between the payload and the shell 3, or between the cutting plate 20 and the shell 3: such relative movement occurs along a direction substantially orthogonal to the ground. The adjustment means 30 thus allow to vary a cutting height of the turfgrass.

### Electric motor 10 of the mobile device 2

The mobile device 2 of the present invention comprises at least one electric motor 10 configured to set in motion, in particular in rotation, the payload 4 for executing the maintenance operations of land 1. The payload can comprise the cutting element 4a adapted to allow cutting the turfgrass on the land 1. The electric motor 10 can advantageously be configured so that one or more parts and/or components thereof, in a condition of use of the device 2, can fulfil the function of the payload 4. The electric motor 10 can be connected to the payload 4 directly, this occurring in the preferred embodiments of the present invention. Alternatively, the electric motor 10 can be connected to the payload 4 indirectly, i.e., by interposing a transmission system adapted to transmit the motion from the electric motor 10 to the payload. The transmission system can comprise toothed wheels meshing with each other, toothed wheels connected to each other by means of a chain or a toothed belt, or pulleys connected to each other by means of a belt. The transmission system can be configured to increase, or reduce, the rotation speed of the payload 4 with respect to the rotation speed of the electric motor. The electric motor 10 can be of the brush type or be brushless: the terms "brush" and "brushless" are known to the person skilled in the art of electric motors, and therefore each comprise the respective technical features of the state of the art. The accompanying drawings show preferred embodiments comprising brushless-type electric motors 10 (however such a representation is not intended to be limiting, whereby the present invention can also be actuated by means of an electric motor of the brush type). In a particularly advantageous embodiment of the present invention, the electric motor 10 installed in the device 2 is of the permanent magnet type.

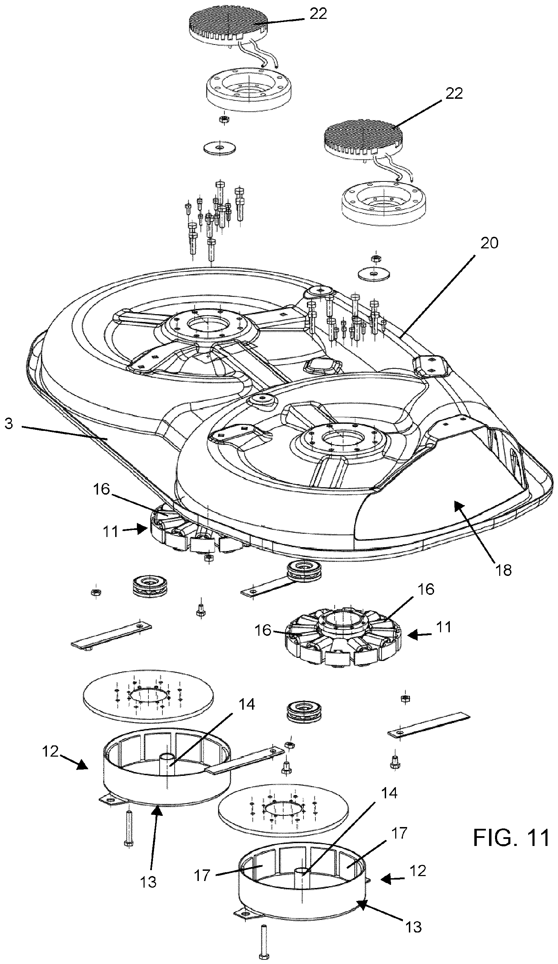

The embodiment of the electric motor according to the present invention is shown in the sectional views of figures 3, 5, 6, 8, 10 and 13, and in the exploded view of figure 11.

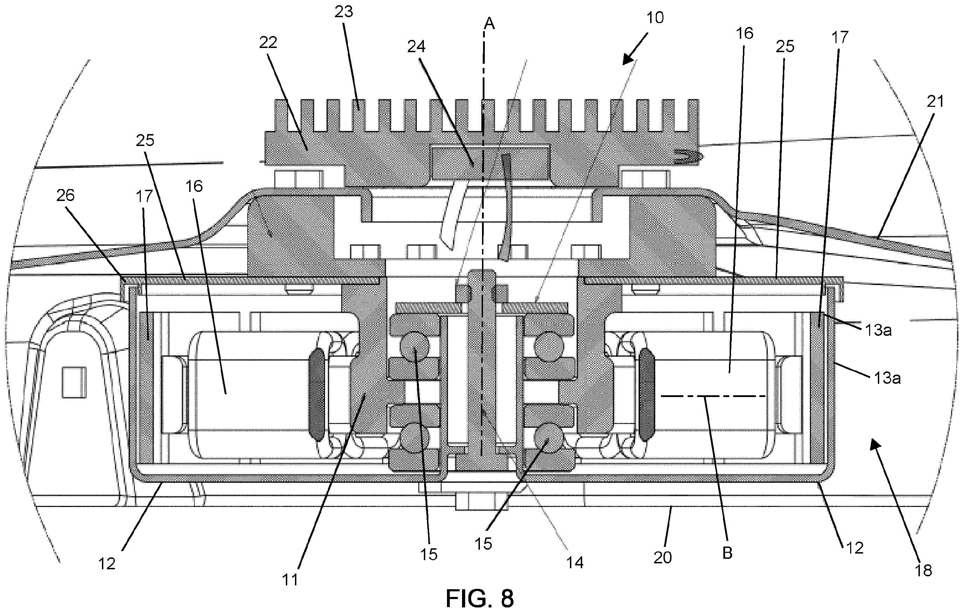

The electric motor 10 comprises a stator 11 and a rotor 12, in which the rotor 12 is arranged outside the stator 11, with respect to a radial direction to the rotation axis A of the rotor 12. The stator 11 is firmly constrained to the shell 3, in particular to the cutting plate 20. The stator 11 is thus integral with the shell 3 and does not have rotational degrees of freedom with respect to the shell 3, the stator 11 being constrained by means of screws or bolts. In an embodiment of the invention, a junction thickness is interposed between the stator 11 and the shell 3, so as to obtain a stable and precise housing of the stator 11 inside the cavity 18, such a junction thickness being provided with through holes to allow the anchoring of the stator 11 to the shell 3 by means of screws or bolts. The stator 11 preferably has an axial-symmetrical shape around the rotation axis of the motor 10. The stator 11 comprises a plurality of windings 16 angularly spaced from each other, preferably equally spaced from each other and configured to determine a variable magnetic field, so as to induce a controlled rotation of the rotor 12 around the stator 11. The windings 16 comprise turns of conductive material, e.g., a copper wire, wound around a central body, e.g., in ferromagnetic material. Such a central body of the stator 11 can extend radially in length according to an axis B orthogonal to the direction of the turns, as shown in the sectional view of figure 8: said axis B is substantially orthogonal to the rotation axis A of the rotor 12.

The rotor 12 is movable by rotation with respect to the stator around the rotation axis A, which is transverse or substantially orthogonal to the ground during a condition of use of the mobile device 2. In particular, such a rotation axis A is transversal or substantially orthogonal to the support plane SP defined by the movement means 6.

The rotor surrounds the stator 11 externally and comprises a core 13 having a substantially axial-symmetric shape, whereby the stator 11 is enclosed inside the core 13. The core 13 further comprises a radially end portion 13a having a substantially cylindrical shape inside which the stator is housed. The radially end portion 13a defines a side wall of the coaxial rotor 12 with respect to the rotation axis of the electric motor 10: such a side wall extends in height along a direction substantially parallel to the rotation axis A of the electric motor 10. In greater detail, the radially end portion 13a extends in height between a connecting portion with a bottom portion of the core 13, and a top end portion, the bottom portion being the portion of the core 13 which has, in the conditions of use of the mobile device 2, the minimum distance with respect to the ground.

The stator 11 can further be associated with a cover plate 25 interposed between the cap 21 and at least part of the stator 11 and configured to prevent the access of dirt, such as grass, soil, or dust towards the stator 11. The cover plate 25 is shown in detail in the sectional view of figure 8, from which it can be seen that such a cover plate 25 cooperates with the core 13 of the rotor 12 in creating a substantial insulation between the volume inside the rotor 12 (in which the stator 11 is housed) and the remaining volume of the cavity 18. Advantageously, the coupling between the cover plate 25 and the core 13 is such as to ensure an adequate level of protection against the intrusion of solid bodies and dust and against access by liquids. The fixing of the cover plate 25, in an embodiment of the invention, can make use of the junction thickness arranged at the interface between the stator 11 and the shell 3 and can include a fixing of the cover plate 25 to the junction thickness by means of screws and bolts of the stator 11 and/or fixing the cover plate 25 to the shell 3 by means of screws and bolts of the stator 11 passing through holes provided in the junction thickness and/or a locking of a flap of the cover plate 25, in particular of an inner flap, between the junction thickness and the stator 11.

In a specific embodiment, the cover plate is interposed between the cap 21 and the top end portion 13b. In particular, the top end portion 13b and the cover plate 25 can be brought together so as to define an inner volume of the rotor 12 which is substantially closed, so as to prevent the entry of dirt in such inner volume. The cover plate 25 can comprise a circular seat 26 coaxial to the rotation axis A of the rotor 12 and housing the top end portion 13b of the core 12. The circular seat 26 can have an inverted "U" shape, in which the concave part of the circular seat 26 faces the land 1 at least during a condition of use.

The core can be made of metallic material, for example aluminium or steel, or of plastic material. In the case of plastic material, the core 13 can be obtained by means of an injection moulding or co-moulding technique.

The rotor 12 further comprises a hub 14 configured to be housed in a seat of the stator 11. One or more bearings 15 can be interposed between the stator and the rotor to allow the rotation of the rotor 12 with respect to the stator 11. The hub 14 is connected to the core 13 so that the core 13 is rotatably mounted with respect to the stator 11. The hub 14 and the core 13 are integral with each other, whereby there is no mutual rotation or movement between the hub 14 and the core 13. In an embodiment of the invention, the hub 14 is internally hollow and a connecting element (such as a screw, a plug or a pin) is housed inside the hub 14 at the rotation axis A, so as to establish the anchoring of the rotor 12 to the stator 11, ensuring the rotational degree of freedom.

The hub 14 can be obtained integrally with the core 13, or rigidly coupled to the core 13, for example by means of a connecting member such as a tab or a key or by means of a direct connection such as a connection with interference or by means of threading. Optionally, the hub 14 is coupled to the core 13 by means of a safety arrangement configured to determine a temporary decoupling between the core 13 and the hub 14 in the occurrence of impacts, for example a collision between a blade and a stone, for example a safety arrangement similar to that described and claimed in patent EP3583834B1 in the name of the same Applicant.

The rotor 12 can comprise a plurality of permanent magnets 17 integrated with or fixed to the core 13. The permanent magnets can be radially interposed between the windings 16 and the radially end portion of the core. The magnetic interaction between the plurality of permanent magnets 17 and the plurality of windings 16 determines the rotation of the rotor 12. The radially end portion has an internal diameter which is larger with respect to an outside diameter of the stator 11, to define between the stator 11 and the radially end portion a sufficient space to accommodate the permanent magnets in interposition.

The rotor 12 carries at least one cutting element 4a constrained to the core 13 and extending from the core 13 away from the stator 11. The cutting element, as previously described, can be a cutting blade extending radially with respect to the rotation axis A of the electric motor 10, the rotation of the cutting elements around the rotation axis A of the electric motor 10 determining, at least during a condition of use of the mobile device, the cutting of the turfgrass.

The cutting element 4a can be made in a single body with the core 13. Alternatively, the cutting element 4a can be a distinct element from the core 13 and constrained to the core 13 by means of assembly, e.g., by means of screws. The assembly between the cutting element 4a and the core 13 can be of a removable type, so as to allow the removal, for example during a maintenance step, of the cutting element 4a from the core 13, for example so as to clean or sharpen or maintain or replace the cutting element 4a. It should be noted that the assembly between the cutting element 4a and the core 13 can be such that any degree of freedom between the cutting element 4a and the core itself is suppressed, so that the assembly between the cutting element 4a and the core 13 makes the cutting element 4a and the core 13 integral with each other and consequently the orientation of the cutting element with respect to the rotor 12 is thus constantly maintained at the fixed orientation during assembly. In an alternative embodiment of the present invention, the assembly between the cutting element 4a and the core 13 is such that there is a rotational degree of freedom between such elements. A similar assembly is obtained for example by means of a hinged connection of the cutting element 4a to the core 13. Thereby, there is the advantage that a yielding selectively remains between the cutting element 4a and the core 13 such as to preserve the integrity of the cutting element 4a in the event of impacts.

The cutting elements 4a can be in a number comprised between two and twelve, preferably between two and eight, more preferably between two and six.

The cutting elements 4a can be angularly equidistant from each other and can be substantially identical to each other in terms of size and/or geometry and/or material.

Based on the what is described above, the electric motor 10 is arranged in the cavity 18 defined by the cap 21. In particular, both the rotor 12 and the stator 11 are arranged in the cavity 18 of the cap 21. In other words, the electric motor 10 is placed entirely below the cutting plate 20, such that the electric motor 10 is interposed, at least during a condition of use, between the cutting plate 20 and the land 1. Such an arrangement of the electric motor facilitates the manufacturing steps of the mobile device 2 and/or the maintenance steps, as the motor can be assembled and disassembled by accessing the cavity 18.

In addition, such an arrangement of the electric motor 10 allows to exploit the air flow generated by the rotor 12, in particular by the cutting elements 4a of the rotor 12, as a cooling system of the electric motor 10. The rotor 12 is thus at least partially configured to act, in a condition of use of the device 2, as a ventilation member intended to establish, in the cavity 18, an air flow intended to promote an evacuation of cut grass from the cavity 18 and to allow a cooling of the stator 11 by forced convection. When the invention is applied to a 2d lawnmower machine of the air cushion type (see figure 7 in particular), the stator 11 provides the driving torque useful for rotating both the rotor 12 and the impeller 31 intended to establish the air flow intended to generate the force that keeps the mobile device 2 raised with respect to the ground. The air flow processed by the impeller 31, besides ensuring precisely the lifting of the mobile device 2 with respect to the ground, cooperates with the cooling of the stator 11. Advantageously, the activation of the impeller 31 occurs simultaneously with respect to the activation of the rotor 12. Advantageously, the impeller 31 and the rotor 12 are coaxial with each other. In an embodiment of the present invention, the impeller 31 is fitted to a shaft of the rotor 12, said shaft preferably crossing the stator 11 so that such an impeller can be positioned above the stator 11. In an embodiment of the invention, the impeller 31 is housed in a chamber defined by an upper recess of the cap 21 and communicating with the cavity 18.

The mobile device 2 further comprises thermal dissipation means 22 connected to the stator 11 of the electric motor 10. The thermal dissipation means 22 can for example be of passive type and comprise a finned cooling surface 23. The thermal dissipation means 22 can comprise a plate placed in contact with the stator 11, such a plate being preferably made of metal material with high thermal conductivity, for example in aluminium or copper. Alternative embodiments in which the thermal dissipation means comprise active devices such as dedicated fans can also be contemplated within the scope of the present invention. In the embodiment of the invention in which the mobile device 2 is a lawnmower machine 2d of the air cushion type, the impeller 31 can be considered as forming part of the dissipation means.

Although figures 3, 5, 7, 8, 10 and 12 show an embodiment in which the thermal dissipation means 22 are arranged outside the cavity 18 of the cap 21, it is nevertheless possible to envisage at least one alternative embodiment in which the thermal dissipation means 22 are arranged inside the cavity 18. In the embodiment shown in figures 9 to 11 and 14, the mobile device 2 comprises two electric motors 10, of the type previously described, each operatively connected to its respective payload 4. The two rotors 12 and/or the stators 11 of the electric motors 10 can be substantially identical to each other in terms of size and/or geometry and/or material. It should be noted that the rotors 12 of the electric motors are housed in the same cavity 18 of the cap 21 common to both electric motors 10. The advantages related to the ease of assembly and disassembly, as well as the advantages related to the dissipation of heat, are likewise achieved by such an embodiment comprising two electric motors 10.

The mobile device 2 can comprise an on-board controller operatively connected to the electric motor 10 and configured to control the rotation of the electric motor 10, e.g., to determine the activation, stop, and speed variation thereof. The on-board controller is an electronic type component which can comprise at least one of: a digital processor, an analogue type circuit, or a combination of one or more digital processors with one or more analogue type circuits. The on-board controller is configured or programmed to control the electric motor 10 (and possibly one or more further electric loads of the electric device 2), for example by means of one or more programs stored in appropriate memory banks connected to the digital processor. In particular, the on-board controller can comprise power and driving means 24 of the stator 11, the power and/or driving means being configured to circulate a current in the stator 11 such as to generate a variable magnetic field and consequently to induce a controlled rotation of the rotor 12 around the stator 11. Optionally, the power and/or driving means 24 are configured to allow a control of the position and/or speed and/or acceleration of the rotor 12. For example, the power and/or driving means 24 can be configured to induce a rotation of the rotor 12 at a speed comprised between 2800 rpm and 3200 rpm. In an embodiment, the power and/or driving means 24 can be arranged, at least in part or entirely, within the cavity 18. Alternatively, the power and/or driving means 24 can be arranged entirely outside the cavity 18. In embodiments of the invention, thermal dissipation means can be associated with the power and/or driving means 24, such thermal dissipation means possibly being able to be shared with the thermal dissipation means of the stator 11. In an embodiment of the invention, the power and/or driving means 24 are housed in a seat obtained from a heat sink also designed to dispose of at least part of the heat generated by the stator 11.

In an embodiment of the present invention, the electric motor 10 can be provided with one or more physical sensors (for example, an encoder or a tachometer) suitable for detecting the relative angular position of the rotor 12 with respect to the stator 11. Alternatively, the electric motor 10 can be sensorless, whereby the relative angular position of the rotor 12 with respect to the stator 11 is obtained or virtually estimated starting from parameters of the motor. In the event of an electric motor of the brushless type, for the detection of the relative angular position of the rotor 12 with respect to the stator 11, it can be contemplated to introduce a deformation to the base configuration adapted to periodically disrupt the induced electromotive force of the electric motor 10 (for example, by envisaging that one of the permanent magnets is suitable for generating a different magnetic field with respect to the remaining permanent magnets applied to the core 13 of the rotor 12).

### Manufacturing method

The present invention is also related to a method 100 for manufacturing a device 2 for the maintenance of land 1, for example for cutting grass. The device 2 can be of the type as previously described. The present method 100 comprises a step i) of arranging an electric motor 10, assembling a stator 11 and a rotor 12 together. Step i) can comprise a sub-step of arranging the rotor 12 outside the stator 11.

The present method 100 further comprises a step ii) of configuring the rotor 12 so that it can act, in a condition of use of the device, as payload 4 of the device 2, for example as a cutting member and/or ventilation member. Step ii) can further comprise the sub-step of obtaining at least one cutting element 4a, for example a blade, in a single piece with the rotor 12: the cutting element 4a can extend from a core 13 of the rotor 12 along a substantially radial or mainly radial direction. In particular the cutting element 4a and the core are made in a single piece.

Alternatively, step ii) can comprise the sub-steps of making at least one cutting element 4a, in particular a blade, separately from the rotor 12 and of assembling the cutting element 4a to the core 13 of the rotor 12: the cutting element 4a extends, following the assembly, from the core 13 along a substantially radial or mainly radial direction. In such a case, the assembly between the cutting element 4a and the core 13 is of the removable type, so as to allow a separation of the cutting element 4a following the assembly. It should be noted that the assembly between the cutting element 4a and the core 13 is such as to suppress any degree of freedom between the cutting element 4a and the core 13: such an assembly can be obtained by means of a screw or bolt connection.

Step ii) can comprise the sub-step of providing the rotor 12 with a plurality of cutting elements 4a substantially identical to each other in terms of size and/or geometry and/or material. The plurality of cutting elements 4a preferably comprises from two to twelve cutting elements 4a, more preferably from two to eight cutting elements 4a, even more preferably from two to six cutting elements 4a. Optionally the cutting elements 4a are substantially angularly equidistant from each other.

The above-described steps i) and ii) can be executed in any order.

The method 100 can further comprise step iii) of preparing a shell 3 for the device 2, and step iv) of associating a cap 21 to the shell 3 which is configured so as to delimit at least one cavity 18.

Step iv) can be executed simultaneously with step iii): in particular step iv is executed by shaping a portion of the shell 3 so as to define the cap 21.

Alternatively, step iv) can be executed separately from step iii) and can comprise the sub-steps of making the cap 21 in the form of a structural component of the device 2 and rigidly connecting the structural component to the shell 3. The structural component can comprise a plastic element obtained by means of a moulding technique or injection co-moulding.

Alternatively, step iv) is executed separately from step iii) and comprises the sub-steps of making the cap 21 in the form of a cutting plate 20 and applying the cutting plate 20 to the shell 3.

Step iv) can also comprise the sub-step of obtaining thermal dissipation means 22 with the cap 21: the thermal dissipation means 22 can comprise a finned surface 23.

The method 100 can further comprise the step v) of positioning the stator 11 in the cavity 18. Following step v), the stator 11 is entirely housed in said cavity 18.

Steps i), ii), iii), iv) and v) can be executed in any order.

The method can further comprise the steps of:
vi) preparing at least one further electric motor 10 by assembling a further stator 11 and a further rotor 12 together,
vii) configuring the further rotor 12 so as to be able to act, in a condition of use of the device, as a payload 4 of the device, in particular as a cutting member and/or ventilation member,
viii) positioning the further stator 11 in the cavity 18.

Steps i), ii), iii), iv), v), vi), vii) and viii) can be executed in any order.

### Operating method

The present invention also relates to an operating method of a land maintenance device as described above, which device can be, in particular, a grass cutting device such as the robot lawnmower 2a, the lawnmower tractor 2b, the pushed lawnmower machine 2c or the air cushion lawnmower machine 2d. The operating method according to the present invention envisages using at least one payload 4 of the device, configured to fulfil the peculiar function of the device (in particular grass cutting), to also fulfil the function of drawing heat from the electric motor 10 to which the payload 4 is keyed and/or from which the payload 4 is activated and/or driven. The operating method according to the present invention includes keeping the temperature of the electric motor 10 below 150°C, preferably below 125°C, even more preferably below 110°C. Optionally, the operating method according to the present invention includes using the payload 4 to draw heat also from electronic devices responsible for powering and/or controlling the electric motor 10, for example from the above-described power and/or driving means 24.

Advantageously, the operating method according to the present invention includes that the (at least partial) dissipation of the heat generated by the electric motor 10 (and possibly also by electronic devices associated with the electric motor 10) occurs by means of a ventilation flow induced by the payload 4, such a ventilation flow precisely drawing heat from the payload 4 by means of forced convection.

In an embodiment of the operating method according to the present invention, the electric motor 10 comprises a stator 11 and a rotor 12 and the rotor 12 is at least partially configured to act as a payload 4, in particular including at least one cutting element 4a. In an embodiment of the operating method according to the present invention, the electric motor 10 and the payload 4 are both housed in a cavity 18 of the device 2, namely located at a face intended to be facing the ground. In an embodiment of the operating method according to the present invention, the withdrawal of heat from the electric motor 10 is performed, in addition to by means of the payload 4, also by means of an impeller 31 configured to generate a lifting force of the device 2 with respect to the ground.

### ADVANTAGES OF THE INVENTION

From what is described and represented, it is evident that the present invention clearly overcomes the drawbacks inherent in the known technical solutions, in particular in the technical solution referred to in patent application CN110063119A.

In particular, the mobile device according to the present invention allows to fully achieve all the set objectives, including:
- an easy installation of the electric motor and/or the payload, with favourable consequences in terms of production and assembly times and costs of the mobile device;
- an improvement in the operating conditions of the electric motor of the mobile device which is consequently less susceptible to overheating phenomena, so that there may be an undersizing (with respect to the prior art) relative to thermal dissipation devices;
- an optimization in the overall configuration of the mobile device which is, as a whole, more compact and lighter, so that the mobile device is more manageable, easier to drive and manoeuvre and more energy efficient.

The advantages of the present invention are to be understood as being fully achieved by the subject matter of the following claims, as well as by variants thereof which the person skilled in the art would obtain from the following claims without the involvement of any inventive step.

## Claims

1. Device (2) for the maintenance of land (1), in particular for cutting grass, comprising:
- a shell (3) and
- at least one electric motor (10), said electric motor (10) being in particular positioned with respect to said shell (3) in accordance with at least one predetermined spatial arrangement,
wherein said electric motor (10) comprises a stator (11) and a rotor (12), said rotor (12) being in particular arranged outside said stator (11),
wherein said rotor (12) is at least partially configured to act, in a condition of use of said device (2), as a payload (4) of said device (2).

2. Device according to claim 1, wherein said rotor (12) is at least partially configured to act, in a condition of use of said device (2), as a cutting member, in particular intended to cut the grass of said land (1).

3. Device according to claim 1 or claim 2, wherein said rotor (12) comprises:
- a core (13) having a substantially axially symmetrical shape, in particular such as to allow said stator (11) to be enclosed by said core (13),
- a hub (14) configured to be housed in a seat (11a) of said stator (11) in particular by interposing one or more bearings (15) and connected to said core (13), so as to allow said core (13) to be rotatably mounted with respect to said stator (11), and
- at least one cutting element (4a) constrained to said core (13) and extending from said core (13) away from said stator (11),
in particular wherein said electric motor (10) is of the brushless type, said stator (11) comprising a plurality of windings (16) and said rotor (12) comprising a plurality of permanent magnets (17), said permanent magnets (17) being integrated with said core (13) or fixed to said core (13) and/or
in particular wherein said cutting element (4a) comprises at least one blade protruding from said core (13) along a substantially radial or mainly radial direction.

4. Device according to claim 3, wherein said cutting element (4a) is made in a single body with said core (13) said cutting element (4a) is made as a component of said rotor (12) distinct from said core (13) and constrained to said core (13) by means of assembly of said cutting element (4a) to said core (13) and/or
wherein the assembly between said cutting element (4a) and said core (13) is of a removable type, so as to allow a separation of said cutting element (4a) in particular for the purpose of cleaning or sharpening or maintenance or replacement of the cutting element (4a) and/or
wherein the assembly between said cutting element (4a) and said core (13) is such as to suppress any degree of freedom between said cutting element (4a) and said core (13), the assembly between said cutting element (4a) and said core (13) being in particular obtained by means of a screw or bolt connection and/or
wherein the assembly between said cutting element (4a) and said core (13) is such as to establish a rotational degree of freedom between said cutting element (4a) and said core (13), the assembly between said cutting element (4a) and said core (13) being in particular obtained by means of a hinge connection and/or
wherein said hub (14) is obtained integrally with said core (13) or rigidly coupled to said core (13), in particular by means of a connecting member such as a tab or a key or by means of a direct connection such as an interference connection or by means of threading and/or
wherein said hub (14) is coupled to said core (13) by means of a safety arrangement configured to determine a temporary decoupling of said core (13) from said hub (14) in the occurrence of impacts.

5. Device according to claim 3 or claim 4, wherein said rotor (12) comprises a plurality of cutting elements (4a), preferably two to twelve cutting elements (4a), more preferably two to eight cutting elements (4a), even more preferably two to six cutting elements (4a),
in particular wherein said cutting elements (4a) are substantially angularly equidistant from each other and/or
in particular wherein said cutting elements (4a) are substantially identical to each other in terms of size and/or geometry and/or material and/or
wherein said core (13) is at least partially made of plastic material, said core (13) being in particular obtained by means of a moulding or injection co-moulding technique and/or
wherein the axis of said core (13), in a condition of use of said device, is ideally orthogonal to the ground or has a predetermined inclination with respect to the ground.

6. Device according to any one of the preceding claims, said device (2) exhibiting at least one cavity (18), said cavity (18) being in particular located at a face intended to face the land (1) in a condition of use of said device, wherein said stator (11) is housed, preferably entirely housed, in said cavity (18),
in particular wherein said rotor (12) is at least partially configured to act, in a condition of use of said device, as a ventilation member, in particular intended to establish, in said cavity (18), a forced air flow intended to promote an evacuation of cut grass from said cavity (18) and/or to allow a cooling of said stator (11) by forced convection and/or
in particular wherein a cap (21) is obtained in a single piece with said shell (3) or rigidly connected to said shell (3) and wherein said cavity (18) is delimited by said cap (21), said cavity (18) being alternatively formed by an opening of said shell (3) and/or
in particular wherein said device (2) further comprises a cutting plate (20) applied to said shell (3) and configured so as to define a cap (21) and wherein said cavity (18) is delimited by said cap (21) and/or in particular wherein said cap (21) is made of plastic material or of metallic material and/or
in particular wherein said cap (21) does not have holes, except for possible holes configured for the passage of electrical wiring and possible holes configured for the passage of fixing members of said stator (11), for example screws or bolts, said cap (21) in particular not having holes for the passage of drive shafts or transmission members, for example belts.

7. Device according to claim 6, wherein thermal dissipation means (22) are associated with said cap (21) near said stator (11), said thermal dissipation means (22) being arranged outside said cavity (18) and being suitable, in a condition of use of said device, to determine a dissipation of the heat generated by said stator (11),
in particular wherein said thermal dissipation means (22) are of the passive type and comprise in particular a finned surface (23) and/or
in particular wherein said thermal dissipation means (22) are integrated in said cap (21), preferably obtained in a single piece with said cap (21), and/or
wherein adjustment means (30) of the cutting height are associated with said shell (3) and/or said cutting plate (20) and are configured to allow a variation of the height assumed, in a condition of use of said device, by said rotor (12) with respect to the ground, said adjustment means being adapted to determine a relative movement of said rotor (12) with respect to said shell (3) or of said cutting plate (20) with respect to said shell (3), said relative movement occurring substantially along a direction substantially orthogonal to the ground.

8. Device according to claim 6 or claim 7, further comprising power and driving means (24) of said stator (11), said power and/or driving means being configured to circulate in said stator (11) a current such as to generate a variable magnetic field and consequently to induce a controlled rotation of said rotor (12) around said stator (11), in particular wherein said power and/or driving means are configured to allow a control of the position and/or speed and/or acceleration of said rotor (12),
in particular wherein said power and/or driving means (24) are configured to induce a rotation of said rotor (12) at a speed comprised between 2800 rpm and 3200 rpm and/or
in particular wherein said power and/or driving means (24) are arranged at least partly within said cavity (18) and/or
in particular wherein said power and/or driving means (24) are arranged entirely outside said cavity (18).

9. Device according to any one of the preceding claims, comprising a plurality of electric motors (10), wherein each of the electric motors of said plurality comprises a respective stator (11) and a respective rotor (12), each rotor (12) being in particular arranged outside the respective stator (11), wherein each rotor (12) is at least partially configured to act, in a condition of use of said device, as a payload (4) of said device, in particular as a cutting member and/or as a ventilation member,
in particular wherein the rotors (12) of the electric motors of said plurality are substantially identical to each other in terms of size and/or geometry and/or material and/or
in particular wherein the rotors (12) of the electric motors of said plurality are housed in a same cavity (18) delimited by a cap (21) defined by said shell (3) or a cutting plate (20) applied to said shell (3).

10. Device according to any one of the preceding claims, wherein said device (2) is a self-driving robot lawnmower (2a) and/or
wherein said device (2) is a lawnmower tractor (2b) with driver on board and/or
wherein said device (2) is a pushed lawnmower (2c) with driver on foot, said pushed lawnmower optionally comprising a cut grass collection bag (32) and/or
wherein said device (2) is a lawnmower machine of the air cushion type (2d),
in particular said device further comprising an impeller (31) configured to generate, in a condition of use of said device, an air flow directed towards the ground and intended to generate a force suitable to keep the device (2) raised with respect to the ground, wherein said impeller (31) is in particular integral with said rotor (12) and/or coaxial to said rotor (12),
in particular wherein, an ideal line being taken intersecting said shell (3) at a first point, said impeller (31) at a second point, said stator (11) at a third point and said rotor (12) at a fourth point, said second point results interposed between said first point and said third point and/or said third point is interposed between said second point and said fourth point.

11. Manufacturing method (100) of a land maintenance device, in particular for cutting grass, comprising the steps of:
i) arranging an electric motor (10) by assembling a stator (11) and a rotor (12) together and
ii) configuring said rotor (12) so as to be able to act, in a condition of use of said device, as a payload (4) of said device, in particular as a cutting member and/or ventilation member,
said steps i) and ii) can be executed in any order.

12. Method according to claim 11, wherein said step i) comprises the sub-step of arranging said rotor (12) outside said stator (11) and/or
wherein said step ii) comprises the sub-step of obtaining at least one cutting element (4a), in particular a blade, in a single piece with said rotor (12), said cutting element (4a) projecting from a core (13) of said rotor (12) along a substantially radial or mainly radial direction and/or
wherein said step ii) comprises the sub-steps of making at least one cutting element (4a), in particular a blade, separately from said rotor (12) and of assembling said cutting element (4a) to a core (13) of said rotor (12), said cutting element (4a) projecting, following the assembly, from said core (13) along a substantially radial or mainly radial direction,
in particular wherein the assembly between said cutting element (4a) and said core (13) is of a removable type, so as to allow a separation of said cutting element (4a) following said assembly and/or in particular wherein the assembly between said cutting element (4a) and said core (13) is such as to suppress any degree of freedom between said cutting element (4a) and said core (13) and is in particular obtained by means of a screw or bolt connection and/or
in particular wherein the assembly between said cutting element (4a) and said core (13) is such as to establish a rotational degree of freedom between said cutting element (4a) and said core (13) and is in particular obtained by means of a hinged connection.

13. Method according to claim 11 or claim 12, wherein said step ii) comprises the sub-step of providing said rotor (12) with a plurality of cutting elements (4a), in particular with a plurality of cutting elements (4a) substantially identical to each other in terms of size and/or geometry and/or material, said plurality of cutting elements (4a) preferably comprising from two to twelve cutting elements (4a), more preferably from two to eight cutting elements (4a), still more preferably from two to six cutting elements (4a), optionally wherein said cutting elements (4a) are substantially angularly equidistant from each other.

14. Method according to any one of claims 11 to 13, further comprising the steps of:
iii) arranging a shell (3) for said device,
iv) associating a cap (21) to said shell (3) configured so as to delimit at least one cavity (18) and
v) positioning said stator (11) in said cavity (18),
said steps i), ii), iii), iv) and v) can be executed in any order,
in particular wherein said step iv) is executed simultaneously with said step iii) and is executed by shaping a portion of said shell (3) so as to define said cap (21),
in particular wherein said step iv) is executed separately from said step iii) and comprises the sub-steps of making said cap (21) in the form of a structural component of said device and of rigidly connecting said structural component to said shell (3), said structural component comprising in particular at least one element in plastic material obtained in particular by means of a moulding or injection co-moulding technique and/or
in particular wherein said step iv) is executed separately from said step iii) and comprises the sub-steps of making said cap (21) in the form of a cutting plate (20) and of applying said cutting plate (20) to said shell (3) and/or
in particular wherein said step iv) comprises the sub-step of obtaining thermal dissipation means (22) in a single piece with said cap (21), said thermal dissipation means (22) comprising in particular a finned surface (23) and/or
in particular wherein, following said step v), said stator (11) is entirely housed in said cavity (18) and/or wherein said method further comprises the steps of:
vi) preparing at least one further electric motor (10) by assembling a further stator (11) and a further rotor (12) together,
ii) configuring said further rotor (12) so as to be able to act, in a condition of use of said device, as a payload (4) of said device, in particular as a cutting member and/or ventilation member and
viii) positioning said further stator (11) in said cavity (18),
said steps i), ii), iii), iv), v), vi), vii) and viii) can be executed in any order.

15. Operating method of a land maintenance device, in particular for cutting grass, said device comprising:
- at least one payload (4), in particular at least one cutting member, and
- an electric motor (10) configured to activate and/or operate said payload (4),
comprising the step of drawing heat from said electric motor (10) by forced convection by means of a ventilation flow induced by said payload (4).
